# FASCICULE DE BREVET EUROPEEN

(11) **EP 2 475 626 B1**
(45) Date de publication et mention de la délivrance du brevet: **03.12.2014**
(21) Numéro de dépôt: 10763820.7
(22) Date de dépôt: 07.09.2010
(51) Int. Cl.: C03C 17/34, C03C 17/36

(54) **MATERIAU ET VITRAGE COMPRENANT CE MATERIAU**
MATERIAL UND VERGLASUNG MIT DIESEM MATERIAL
MATERIAL AND GLAZING COMPRISING SAID MATERIAL

(30) Priorité: 08.09.2009 FR 0956096
(43) Date de publication de la demande: 18.07.2012
(73) Titulaire: Saint-Gobain Glass France, 92400 Courbevoie (FR)
(72) Inventeur: DURANDEAU, Anne, F-75009 Paris (FR); KHARCHENKO, Andriy, F-91120 Palaiseau (FR); MAUVERNAY, Bruno, F-75014 Paris (FR); THOLLAS, Emilie, F-95120 Ermont (FR); SANDRE-CHARDONNAL, Etienne, F-75009 Paris (FR); GILLET, Pierre-Alain, F-78750 Mareil-Marly (FR); BILLERT, Ulrich, F-78170 La Celle Saint-Cloud (FR)
(74) Mandataire: Teyssedre, Laurent
(86) Numéro de dépôt international: PCT/FR2010/051852
(87) Numéro de publication internationale: WO 2011/030049

(56) Documents cités:
- EP-A1- 0 825 478
- EP-A1- 1 074 525
- EP-A1- 1 300 374
- WO-A1-2006/134335
- WO-A1-2009/106864
- WO-A1-2010/142926
- US-A1- 2005 079 369

## Description

L'invention se rapporte au domaine des matériaux comprenant un substrat en verre revêtu d'une couche photocatalytique.

Les couches photocatalytiques, notamment celles à base d'oxyde de titane, sont connues pour conférer des propriétés autonettoyantes et antisalissure aux substrats qu'elles revêtent. Deux propriétés sont à l'origine de ces caractéristiques avantageuses. L'oxyde de titane est tout d'abord photocatalytique, c'est-à-dire qu'il est capable sous un rayonnement adéquat, généralement un rayonnement ultraviolet, de catalyser les réactions de dégradation de composés organiques. Cette activité photocatalytique est initiée au sein de la couche par la création d'une paire électron-trou. En outre, l'oxyde de titane présente une hydrophilie extrêmement prononcée lorsqu'il est irradié par ce même type de rayonnement. Cette forte hydrophilie permet l'évacuation des salissures minérales sous ruissellement d'eau, par exemple d'eau de pluie. De tels matériaux, en particulier vitrages, sont décrits par exemple dans la demande EP-A-0 850 204.

Il existe des vitrages combinant de telles propriétés autonettoyantes et antisalissure avec des propriétés de contrôle solaire. On entend par contrôle solaire la capacité à réduire la quantité d'énergie solaire susceptible de traverser les vitrages et de réchauffer les pièces des habitations et les habitacles des véhicules. Des vitrages dotés de telles propriétés permettent d'éviter un échauffement excessif des pièces ou habitacles susmentionnés et le cas échéant de limiter la consommation d'énergie liée à leur climatisation. Il est ainsi connu de la demande WO 03/050056 de déposer des couches photocatalytiques sur des verres teintés. Les verres teintés présentent toutefois une faible sélectivité, qui correspond au rapport entre la transmission lumineuse et la transmission énergétique. Il existe également des vitrages appelés couramment « dual coatings », qui comprennent une couche photocatalytique sur une face et un revêtement de contrôle solaire sur l'autre face. L'intérêt d'une telle disposition est que le revêtement de contrôle solaire, qui présente souvent une faible durabilité climatique, est protégé en étant situé en face 2 du vitrage, donc à l'intérieur du bâtiment, tandis que le revêtement photocatalytique est en face 1, à l'extérieur du bâtiment, où il est le plus utile. De tels vitrages posent toutefois des difficultés de transformation car la couche ou l'empilement déposé sur la face inférieure risque d'être endommagé pendant les étapes de convoyage, notamment du fait des contacts avec les rouleaux de convoyage. Il serait donc utile de pouvoir proposer des vitrages présentant sur la même face, donc en face 1, les fonctionnalités de contrôle solaire et autonettoyantes. Les tentatives pour résoudre ce problème se sont toutefois révélées vaines jusqu'à présent du fait de la mauvaise durabilité climatique des empilements obtenus.

Un premier but de l'invention est de proposer des matériaux photocatalytiques pouvant être incorporés dans des vitrages de contrôle solaire, qui ne présentent pas les inconvénients susmentionnés. Un second but de l'invention est de proposer des vitrages de contrôle solaire présentant une excellente durabilité climatique au sens de la norme EN 1096-2 :2001. Un troisième but de l'invention est de proposer des matériaux présentant une teinte neutre en transmission et/ou en réflexion.

Ces buts sont atteints par un matériau comprenant un substrat en verre revêtu sur au moins une de ses faces d'un empilement de couches minces comprenant depuis ledit substrat au moins une couche diélectrique inférieure, au moins une couche fonctionnelle en métal ou nitrure métallique, au moins une couche diélectrique supérieure, au moins une couche d'oxyde de titane au moins partiellement cristallisé sous forme anatase, ledit métal ou nitrure métallique étant à base de Nb, NbN, W, WN, Ta, TaN ou de l'un quelconque de leurs alliages ou solutions solides.

Les métaux ou nitrures choisis, en combinaison avec les couches diélectriques et la couche d'oxyde de titane, permettent de manière surprenante d'obtenir une excellente durabilité climatique et de satisfaire aux exigences de la norme EN 1096-2 :2001, même après 56 jours de tests. En conséquence, de tels vitrages peuvent être disposés de sorte que l'empilement se trouve en face 1, c'est-à-dire à l'extérieur du bâtiment, où la couche photocatalytique peut pleinement jouer son rôle vis-à-vis des salissures et de la pollution atmosphérique. Cette combinaison permet donc de proposer des vitrages possédant à la fois des propriétés autonettoyantes et anti-salissures et des propriétés de contrôle solaire mais ne présentant pas les inconvénients des « dual coatings » connus de l'art antérieur.

De préférence, le substrat est une feuille de verre. La feuille peut être plane ou bombée, et présenter tout type de dimensions, notamment supérieures à 1 mètre. Le verre est de préférence de type silico-sodo-calcique, mais d'autres types de verres, comme les verres borosilicatés ou les aluminosilicates peuvent aussi être utilisés. Le verre peut être clair ou extra-clair, ou encore teinté, par exemple en bleu, vert, ambre, bronze ou gris. L'épaisseur de la feuille de verre est typiquement comprise entre 0,5 et 19 mm, notamment entre 2 et 12 mm, voire entre 4 et 8 mm.

L'empilement de couches minces ne comprend de préférence pas de couches d'argent ou de cuivre car ces couches risquent d'impartir une mauvaise résistance climatique au vitrage, ce qui est en particulier préjudiciable lorsque l'empilement doit être placé en face 1 du vitrage.

Les meilleurs résultats, notamment en termes de durabilité climatique, sont obtenus lorsque le métal ou le nitrure métallique est choisi parmi NbN, Nb, WN, W. Ces métaux ou nitrures ont en outre de bonnes propriétés d'absorption dans le domaine du visible et de l'infrarouge. L'épaisseur de la couche de métal ou de nitrure métallique est à adapter en fonction de la transmission lumineuse visée. Elle varie typiquement entre 3 et 50 nm, notamment entre 5 et 30 nm, voire entre 5 et 20 nm. La transmission lumineuse du matériau est de préférence comprise entre 5 et 70%, notamment entre 10 et 60%.

La ou chaque couche diélectrique inférieure est destinée à protéger la couche de métal ou de nitrure contre la diffusion des ions alcalins du substrat, contre l'oxydation et la délamination. De préférence, une ou deux couches diélectriques supérieures sont utilisées. La ou chaque couche diélectrique supérieure est destinée à diminuer la réflexion intrinsèque de la couche de métal ou de nitrure et à protéger cette dernière contre la corrosion et les agressions mécaniques (rayures, abrasion...). La au moins une couche diélectrique inférieure et/ou la au moins une couche diélectrique supérieure est de préférence choisie parmi l'oxyde, le nitrure ou l'oxynitrure de silicium ou d'aluminium, l'oxyde d'étain ou l'oxyde mixte d'étain et de zinc. Le nitrure de silicium est préféré car il procure une excellente résistance mécanique et à la trempe, et peut être facilement déposé par pulvérisation cathodique magnétron. Chacune de ces couches peut être pure ou dopée. Il est ainsi fréquent de doper les couches de silice ou de nitrure de silicium avec un atome tel que l'aluminium afin de faciliter leur dépôt par pulvérisation cathodique. L'épaisseur de la ou chaque couche diélectrique inférieure et/ou de la ou chaque couche diélectrique supérieure est de préférence comprise entre 5 et 100 nm, notamment entre 10 et 50 nm.

Lorsque la couche fonctionnelle est métallique, notamment en niobium ou à base de niobium, il est préférable d'interposer une couche de bloqueur entre la couche fonctionnelle et la couche diélectrique supérieure la plus proche de la couche fonctionnelle, voire également entre la couche fonctionnelle et la couche diélectrique inférieure la plus proche de la couche fonctionnelle. Cette couche de bloqueur est destinée à éviter l'oxydation ou la nitruration de la couche métallique fonctionnelle lors d'éventuels traitements thermiques, par exemple de trempe. Cette couche de bloqueur est très fine, de préférence entre 1 et 5 nm d'épaisseur. Elle est de préférence en un métal choisi parmi le titane ou le chrome ou en un alliage de nickel et de chrome. La présence de couche (s) de bloqueur(s) rend l'empilement trempable lorsque la couche fonctionnelle est en métal, au sens où l'empilement présente des propriétés optiques similaires avant et après trempe.

La couche fonctionnelle, notamment lorsqu'elle est en nitrure, peut être elle-même surmontée d'une couche supplémentaire en nitrure, par exemple en nitrure de niobium, de titane, de zirconium ou de chrome. Cette couche supplémentaire permet éventuellement d'ajuster plus facilement les propriétés de réflexion, notamment les valeurs chromatiques.

De préférence, au moins une couche de silice est interposée entre la au moins une couche diélectrique supérieure et la au moins une couche d'oxyde de titane au moins partiellement cristallisé sous forme anatase et/ou entre le substrat et la couche diélectrique inférieure la plus proche du substrat. Cette couche supplémentaire permet d'améliorer l'activité photocatalytique du revêtement. Dans la deuxième alternative, les variations de couleur en réflexion de l'empilement liées à d'éventuelles variations d'épaisseur de la couche de silice sont minimisées. Dans la première alternative en revanche, l'épaisseur et l'homogénéité de la couche de silice doivent être parfaitement contrôlées pour une bonne maîtrise de la couleur en réflexion de l'empilement. La ou chaque couche de silice possède de préférence une épaisseur comprise entre 5 et 100 nm, notamment entre 10 et 40 nm. La couche de silice peut être pure ou dopée, par exemple par des atomes d'aluminium.

Les empilements préférés sont les suivants :
- Verre / Si₃N₄ / NbN / Si₃N₄ / TiO₂
- Verre / Si₃N₄ / NbN / Si₃N₄ / SiO₂ / TiO₂
- Verre / SiO₂ / Si₃N₄ / NbN / Si₃N₄ / TiO₂
- Verre / SiO₂ / Si₃N₄ / NbN / Si₃N₄ / SiO₂ / TiO₂
- Verre / Si₃N₄ / WN / Si₃N₄ / TiO₂
- Verre / Si₃N₄ / WN / Si₃N₄ / SiO₂ / TiO₂
- Verre / SiO₂ / Si₃N₄ / WN / Si₃N₉ / TiO₂
- Verre / SiO₂ / Si₃N₄ / WN / Si₃N₄ / SiO₂ / TiO₂
- Verre / Si₃N₄ / Ti / Nb / Ti / Si₃N₄ / TiO₂
- Verre / Si₃N₉ / Ti / Nb / Ti / Si₃N₄ / SiO₂ / TiO₂
- Verre / SiO₂ / Si₃N₄ / Ti / Nb / Ti / Si₃N₄ / TiO₂
- Verre / SiO₂ / Si₃N₄ / Ti / Nb / Ti / Si₃N₄ / SiO₂ / TiO₂

Dans ces exemples non limitatifs d'empilements selon l'invention, la couche de bloqueur en titane peut être remplacée par une couche en chrome. Les gammes d'épaisseurs pour les différentes couches de l'empilement sont celles décrites précédemment et ne sont pas rappelées ici afin de ne pas alourdir le texte.

L'oxyde de titane peut être pur ou dopé, par exemple par des métaux de transition (par exemple W, Mo, V, Nb), des ions lanthanides ou des métaux nobles (tels que par exemple platine, palladium), ou encore par des atomes d'azote ou de carbone. Ces différentes formes de dopage permettent soit d'augmenter l'activité photocatalytique du matériau, soit de décaler le gap de l'oxyde de titane vers des longueurs d'onde proches du domaine du visible ou comprises dans ce domaine.

La couche d'oxyde de titane est normalement la dernière couche de l'empilement déposé sur le substrat, autrement dit la couche de l'empilement la plus éloignée du substrat. Il importe en effet que la couche photocatalytique soit en contact avec l'atmosphère et ses polluants. Il est toutefois possible de déposer sur la couche photocatalytique une très fine couche, généralement discontinue ou poreuse. Il peut par exemple s'agir d'une couche à base de métaux nobles destinée à accroître l'activité photocatalytique du matériau. Il peut encore s'agir de fines couches hydrophiles, par exemple en silice, tel qu'enseigné dans les demandes WO2005/040058 ou 2007/045805.

L'épaisseur de la couche d'oxyde de titane est de préférence comprise entre 5 et 50 nm, notamment entre 5 et 20 nm.

L'utilisation d'un empilement sur une seule face du substrat permet de simplifier considérablement le procédé de dépôt, d'en diminuer le coût, et d'éviter les risques d'endommagement des couches lors du convoyage ou de la manutention.

Le matériau selon l'invention présente de préférence une transmission énergétique (au sens de la norme NF EN 410 :1998) comprise entre 2 et 70%, notamment entre 5 et 65%.

L'invention a également pour objet un procédé d'obtention d'un matériau, dans lequel on dépose les couches de l'empilement par pulvérisation cathodique magnétron ou dépôt chimique en phase vapeur (CVD).

Dans le procédé de pulvérisation cathodique, notamment assisté par champ magnétique (procédé magnétron), des espèces excitées d'un plasma viennent arracher les atomes d'une cible située en regard du substrat à revêtir. Pour le dépôt de la couche d'oxyde de titane, la cible peut notamment être en titane métallique ou en TiOₓ, le plasma devant contenir de l'oxygène (on parle de pulvérisation cathodique réactive). Il est également possible de déposer des couches de Si₃N₄ ou de SiO₂ à l'aide d'une cible en silicium, dopé à l'aluminium, dans un plasma contenant de l'argon et respectivement de l'azote ou de l'oxygène. La couche fonctionnelle en métal ou en nitrure peut être déposée à l'aide d'une cible métallique, respectivement en atmosphère inerte (par exemple d'argon) ou en atmosphère réactive contenant de l'azote.

Le dépôt chimique en phase vapeur, généralement désigné sous son acronyme anglais CVD est un procédé de pyrolyse à base de précurseurs gazeux qui se décomposent sous l'effet de la chaleur du substrat. Dans le cas de l'oxyde de titane, les précurseurs peuvent être à titre d'exemple du tétrachlorure de titane, du tétraisopropoxyde de titane ou du tétraorthobutoxyde de titane.

L'étape de dépôt est de préférence suivie d'un traitement thermique, notamment du type trempe, bombage, recuit, ou d'un traitement rapide à l'aide d'un rayonnement laser ou d'une flamme, notamment lorsque la couche d'oxyde de titane a été déposée par pulvérisation cathodique. Ce traitement thermique est destiné à cristalliser l'oxyde de titane sous la forme anatase. Le traitement rapide est de préférence un traitement tel que décrit dans la demande WO2008/096089.

L'invention a également pour objet un vitrage comprenant au moins un matériau selon l'invention. Le vitrage peut être simple ou multiple (notamment double ou triple), au sens où il peut comprendre plusieurs feuilles de verre ménageant un espace rempli de gaz. Le vitrage peut également être feuilleté et/ou trempé et/ou durci et/ou bombé. Dans le cas d'un vitrage simple ou multiple, le revêtement de contrôle solaire est de préférence déposé en face 1.

Le vitrage de contrôle solaire ainsi obtenu présente en outre des propriétés autonettoyantes, antisalissure, antibuée et d'amélioration de la vision par temps de pluie. Lorsque la couche fonctionnelle est un métal, par exemple Nb, l'émissivité de l'empilement s'en trouve réduite, typiquement à des valeurs de 0,5 ou moins, voire 0,3. L'empilement présente donc à la fois des propriétés de contrôle solaire et de basse émissivité. Lorsque l'empilement est déposé en face 1, cette dernière propriété est particulièrement avantageuse pour limiter la condensation (buée et/ou givre) sur la surface de doubles vitrages, en particulier lorsqu'ils sont inclinés (par exemple lorsqu'ils sont intégrés à des toitures ou des vérandas). La présence d'une couche bas-émissive en face 1 permet de limiter les échanges de chaleur avec l'extérieur pendant la nuit, et donc de maintenir une température de surface du verre supérieure au point de rosée. L'apparition de buée ou de givre est donc fortement atténuée voire totalement supprimée.

Dans le cas d'un vitrage simple, l'empilement peut aussi être déposé en face 2, procurant des propriétés de facilité de nettoyage et antibuée.

L'autre face du substrat revêtu selon l'invention, ou le cas échéant une face d'un autre substrat du vitrage multiple, peut être revêtue d'une autre couche fonctionnelle ou d'un empilement de couches fonctionnelles. Il peut notamment s'agir d'une autre couche photocatalytique, par exemple un autre empilement selon l'invention. Il peut aussi s'agir de couches ou d'empilements à fonction thermique, notamment antisolaires ou bas-émissifs, par exemple des empilements comprenant une couche d'argent protégée par des couches diélectriques. Il peut encore s'agir d'une couche miroir, notamment à base d'argent. Il peut enfin s'agir d'une laque ou d'un émail destinée à opacifier le vitrage pour en faire un panneau de parement de façade appelé allège. L'allège est disposée sur la façade aux côtés des vitrages non opacifiés et permet d'obtenir des façades entièrement vitrées et homogènes du point de vue esthétique.

L'invention a enfin pour objet l'utilisation d'un vitrage selon l'invention en tant que vitrage de contrôle solaire pour le bâtiment ou les véhicules (terrestres, aériens, ferroviaires). Le vitrage selon l'invention est de préférence employé en face 1, au sens où l'empilement est placé à l'extérieur du bâtiment ou du véhicule. Dans le cadre d'applications dans le domaine du bâtiment, les vitrages sont de préférence employés en vérandas, en façade ou en toiture. Pour des applications automobiles, les vitrages peuvent avantageusement former des toits.

L'invention sera mieux comprise à la lumière des exemples non limitatifs qui suivent.

Tous les exemples, comparatifs ou selon l'invention, sont réalisés à l'aide d'un dépôt par pulvérisation cathodique magnétron sur des substrats de verre clair commercialisé sous la marque Planilux par la demanderesse.

Les couches de nitrure de silicium sont obtenues à partir d'une cible de silicium dopée à 8% massique en aluminium, sous une atmosphère composée de 45% d'argon et 55% d'azote. Les couches de niobium sont obtenues à partir d'une cible en niobium sous une atmosphère d'argon. Les couches de nitrure de niobium font appel au même type de cible, mais sous une atmosphère composée de 45% d'argon et de 55% d'azote. Les couches de titane sont obtenues à l'aide d'une cible en titane sous atmosphère d'argon. Les couches d'oxyde de titane sont quant à elles obtenues soit à partir d'une cible en titane sous une atmosphère composée d'argon et d'oxygène, soit à partir d'une cible en oxyde de titane sous-stoechiométrique sous atmosphère d'argon enrichie à 1% d'oxygène. Les couches de silice sont obtenues à l'aide d'une cible de silicium dopée à 8% massique d'aluminium, sous une atmosphère composée de 75 d'argon et de 25% d'oxygène.

### 1^{ère} série d'exemples

Le tableau 1 présente la composition et l'épaisseur de l'exemple comparatif C1 et des exemples selon l'invention 1 à 5. L'empilement est réalisé dans l'ordre du tableau, la première ligne correspondant à la couche la plus éloignée du substrat et la dernière ligne à celle en contact avec le substrat. Comme dans le reste de la description, les épaisseurs sont des épaisseurs physiques exprimées en nm.

**Tableau 1**

| | C1 | 1 | 2 | 3 | 4 | 5 |
|---|---|---|---|---|---|---|
| TiO₂ | 0 | 10 | 10 | 10 | 10 | 10 |
| SiO₂ | 0 | 0 | 0 | 23 | 20 | 10 |
| Si₃N₄ | 31 | 31,1 | 18 | 18 | 0 | 5 |
| NbN | 6, 6 | 6, 6 | 6,8 | 6, 8 | 7,0 | 7,0 |
| Si₃N₄ | 11,3 | 11,3 | 12 | 12 | 20 | 20 |

Le tableau 2 ci-après indique les propriétés optiques de l'exemple comparatif C1 et des exemples selon l'invention 1 à 5. Sont reproduites :
- la transmission lumineuse (TL) et les réflexions lumineuses côté verre (RLᵥ) et côté couches (RL_{c}), ainsi que la transmission énergétique (TE) au sens de la norme NF EN 410 :1998,
- les valeurs chromatiques L*a*b* correspondantes (en transmission et en réflexion côté verre et côté couches), calculée en prenant en considération l'illuminant D65 et l'observateur de référence CIE-1931.

**Tableau 2**

| | C1 | 1 | 2 | 3 | 4 | 5 |
|---|---|---|---|---|---|---|
| TL (%) | 50,2 | 54,2 | 51,7 | 57,2 | 55,2 | 51,1 |
| L* | 76,2 | 78,6 | 77,1 | 80,3 | 79,2 | 76,7 |
| a* | -1, 5 | -1,4 | -1,3 | -1,6 | -1,2 | -1,3 |
| b* | -1,8 | -2,1 | -1,6 | -3,3 | -2,0 | -2,7 |
| RL_{c} (%) | 16,7 | 14,0 | 17,3 | 8, 9 | 15,4 | 17,4 |
| L* | 47,8 | 44,3 | 48, 6 | 35,8 | 46,2 | 48, 8 |
| a* | 0, 6 | 0, 6 | 0, 6 | 1,5 | -0,7 | 0,1 |
| b* | 0,7 | 1, 9 | -0,3 | 11,8 | 4,0 | 2,1 |
| RLᵥ (%) | 17,0 | 25,3 | 19,9 | 20,8 | 16,8 | 15,8 |
| L* | 48,2 | 57,3 | 51,7 | 52,8 | 48,0 | 46, 6 |
| a* | -1,1 | -2,8 | -1,2 | -3,1 | -1,9 | -1,0 |
| b* | -9,8 | -8,1 | -11,1 | -3,2 | -8,0 | -9,5 |
| TE (%) | 45,3 | 49, 0 | 47, 6 | 50,9 | 50,2 | 46,0 |

Les échantillons des exemples C1 et 1 à 5 sont ensuite soumis à un traitement de recuit, à une température de 620°C pendant 10 minutes.

Le tableau 3 ci-après indique les propriétés optiques de l'exemple comparatif C1 et des exemples selon l'invention 1 à 5 après ce traitement de recuit. Il indique également les variations de couleur en transmission et réflexion induites par le recuit. Ces variations sont exprimées par la grandeur ΔE* (qui correspond à la racine carrée de la somme des carrés des différences de valeurs chromatiques avant et après recuit). L'indice t, v, ou c correspond respectivement à la transmission, la réflexion côté verre et la réflexion côté couche.

**Tableau 3**

| | C1 | 1 | 2 | 3 | 4 | 5 |
|---|---|---|---|---|---|---|
| TL (%) | 51,6 | 54 | 51,4 | 56,6 | 56,9 | 50,4 |
| L* | 77,0 | 78,4 | 76,9 | 79,9 | 80,1 | 76,3 |
| a* | -1,6 | -1,9 | -1,8 | -2,0 | -1,4 | -1,5 |
| b* | -2,4 | -2,8 | -2,9 | -3,9 | -2,9 | -3,5 |
| RL_{c} (%) | 15,6 | 11,9 | 15,3 | 6,8 | 14,5 | 16,4 |
| L* | 46,5 | 41,1 | 46,0 | 31,3 | 44,9 | 47,5 |
| a* | 1,2 | 2,0 | 1,7 | 3,8 | 0,3 | 0,8 |
| b* | 0,4 | 0,0 | 0,1 | 8,8 | 3,7 | 2,9 |
| RLᵥ (%) | 15,4 | 24,7 | 19,2 | 20,6 | 16,5 | 15,4 |
| L* | 46,2 | 56,8 | 50,9 | 52,5 | 47,6 | 46,2 |
| a* | 0,7 | -2,8 | -0,9 | -3,1 | -1,4 | -0,6 |
| b* | -9,6 | -8,1 | -11,5 | -3,1 | -8,2 | -10,1 |
| TE (%) | 46,2 | 47,6 | 45,9 | 49,1 | 51,8 | 44,8 |
| ΔE*ₜ | 1,0 | 0,9 | 1,4 | 0,9 | 1,3 | 0,9 |
| ΔE*_{c} | 1,5 | 3,9 | 2,9 | 5,8 | 1,7 | 1,6 |
| ΔE*ᵥ | 2,8 | 0,5 | 0,9 | 0,2 | 0,6 | 0,8 |

Les faibles valeurs de ΔE* montrent que les empilements ne voient pas leurs propriétés colorimétriques évoluer de manière significative du fait du traitement de recuit.

L'activité photocatalytique des échantillons comparatifs C1 et selon l'invention 1 à 5 a été mesurée selon le test suivant.

Une solution aqueuse de bleu de méthylène est placée en contact dans une cellule étanche avec le substrat revêtu (ce dernier formant le fond de la cellule). Après exposition à un rayonnement ultraviolet pendant 30 minutes, la concentration de bleu de méthylène est évaluée par une mesure de transmission lumineuse. La valeur d'activité photocatalytique, exprimée en g.l⁻¹.min⁻¹, correspond à la diminution de la concentration en bleu de méthylène par unité de temps d'exposition.

Le tableau 4 ci-après reproduit les résultats obtenus.

**Tableau 4**

| | Activité photocatalytique |
|---|---|
| C1 | 0 |
| 1 | 15 |
| 2 | 21 |
| 3 | 30 |
| 4 | 34 |
| 5 | 32 |

La présence d'une couche de silice entre la deuxième couche diélectrique et la couche photocatalytique permet donc d'accroître de manière importante l'activité photocatalytique du revêtement. L'analyse par spectroscopie de masse à ionisation secondaire (SIMS) confirme que la quantité de sodium au sein de la couche photocatalytique est bien plus faible lorsque la couche de silice est présente.

### 2^{ème} série d'exemples

Le tableau 5 présente la composition et l'épaisseur de l'exemple comparatif C2 et des exemples selon l'invention 6 et 7. L'empilement est réalisé dans l'ordre du tableau, la première ligne correspondant à la couche la plus éloignée du substrat et la dernière ligne à celle en contact avec le substrat. Comme dans le reste de la description, les épaisseurs sont des épaisseurs physiques exprimées en nm.

**Tableau 5**

| | C2 | 6 | 7 |
|---|---|---|---|
| TiO₂ | 0 | 11, 6 | 11, 6 |
| SiO₂ | 0 | 10, 6 | 10, 6 |
| Si₃N₄ | 31 | 11 | 5,3 |
| NbN | 7,0 | 7,4 | 7,4 |
| Si₃N₄ | 11 | 10 | 10 |

Les échantillons C2 et 6 et 7 ont subi un traitement de trempe. Les propriétés optiques des échantillons après trempe sont récapitulées dans le tableau 6.

**Tableau 6**

| | C2 | 6 | 7 |
|---|---|---|---|
| TL (%) | 51,4 | 52,5 | 51,5 |
| L* | 76, 9 | 77, 6 | 77,0 |
| a* | -1,5 | -1,8 | -1,8 |
| b* | 0,2 | -2,0 | -1,9 |
| RL_{c} (%) | 16, 9 | 14,4 | 15,4 |
| L* | 48,1 | 44, 8 | 46,2 |
| a* | 0,4 | 0, 6 | 0,7 |
| b* | 0,9 | 4,0 | 2,7 |
| RLᵥ (%) | 18,5 | 17, 6 | 15,4 |
| a* | -1,1 | -2,0 | -1,4 |
| b* | -9, 6 | -11,1 | -11, 6 |

Les échantillons C2, 6 et 7 trempés ont subi les différents tests de durabilité climatique décrits dans la norme EN 1096-2 :2001. Il s'agit des tests :
- de résistance à la condensation, selon l'annexe B de la norme EN 1096-2 :2001, noté « HH »
- de résistance aux attaques acides, selon l'annexe C de la norme susmentionnée, noté « SO₂ »,
- de résistance au brouillard salin neutre, selon l'annexe D de la norme susmentionnée, noté « BSN ».

Le tableau 7 indique les résultats en termes de contrôle visuel et de variations colorimétriques et de réflexion et transmission lumineuses après 56 jours de tests. Dans les lignes « contrôle visuel », « OK » indique un succès - aucun défaut, « NOK » indique un échec.

**Tableau 7**

| | | C2 | 6 | 7 |
|---|---|---|---|---|
| BSN | Contrôle visuel | NOK | OK | OK |
| | ΔE*_{c} | 1,7 | 0,2 | 0, 6 |
| | ΔRL_{c} | 1,1 | 0,2 | 0,4 |
| | ΔTL | 0,7 | 0,1 | 0,3 |
| HH | Contrôle visuel | NOK | OK | OK |
| | ΔE*_{c} | 0,4 | 0,4 | 0,4 |
| | ΔRL_{c} | 0,1 | 0,1 | 0,3 |
| | ΔTL | 0,3 | 0,2 | 0,4 |
| SO₂ | Contrôle visuel | OK | OK | OK |
| | ΔE*_{c} | 0,4 | 0,5 | 0,5 |
| | ΔRL_{c} | 0,2 | 0,2 | 0,3 |
| | ΔTL | 0,2 | 0,2 | 0,2 |

Les échantillons C2, 6 et 7 trempés ont également subi un test de vieillissement accéléré consistant à les plonger dans de l'eau déminéralisée bouillante pendant 2 heures. Les variations colorimétriques dues à un tel traitement sont présentées dans le tableau 8.

**Tableau 8**

| | C2 | 6 | 7 |
|---|---|---|---|
| ΔTL | 0,40 | 0,08 | 0,08 |
| ΔE*ₜ | 0,35 | 0,04 | 0,05 |
| ΔRL_{c} | 0,61 | 0,10 | 0,03 |
| ΔE*_{c} | 1,03 | 0,16 | 0,06 |
| ΔRLᵥ | 0,61 | 0,10 | 0,03 |
| ΔE*ᵥ | 1,03 | 0,16 | 0,06 |

Les empilements selon l'invention présentent globalement une meilleure résistance climatique que l'empilement comparatif, notamment au test accéléré à l'eau bouillante ainsi qu'aux tests de résistance à la condensation et au brouillard salin neutre. La couche d'oxyde de titane, en plus de conférer des propriétés photocatalytiques, améliore donc considérablement la durabilité climatique des vitrages selon l'invention, ce qui permet de positionner l'empilement en face 1.

En comparaison, des couches de contrôle solaire comprenant une couche d'argent entre plusieurs couches de nitrure de silicium et recouverte d'une couche d'oxyde de titane ne passent pas les tests BSN, HH et SO₂, même après 21 jours de tests.

### 3^{ème} série d'exemples

Le tableau 9 présente la composition et l'épaisseur de l'exemple comparatif C3 et de l'exemple selon l'invention 8. L'empilement est réalisé dans l'ordre du tableau, la première ligne correspondant à la couche la plus éloignée du substrat et la dernière ligne à celle en contact avec le substrat. Comme dans le reste de la description, les épaisseurs sont des épaisseurs physiques exprimées en nm.

**Tableau 9**

| | C3 | 8 |
|---|---|---|
| TiO₂ | 0 | 5 |
| Si₃N₄ | 45 | 38 |
| Ti | 1 | 1 |
| Nb | 19 | 19 |
| Ti | 1 | 1 |
| Si₃N₄ | 40 | 40 |

Le tableau 10 récapitule les propriétés colorimétriques et énergétiques des exemples C3 et 8 après trempe. Le terme « TE » correspond à la transmission énergétique au sens de la norme NF EN 410 :1998.

**Tableau 10**

| | C3 | 8 |
|---|---|---|
| TL (%) | 26,2 | 27,3 |
| TE (%) | 18,7 | 19,4 |
| L* | 58,3 | 59,2 |
| a* | -4,3 | -4, 6 |
| b* | 4,3 | 3,4 |
| RL_{c} (%) | 10,2 | 10,3 |
| L* | 38,3 | 38,4 |
| a* | 16,0 | 16,5 |
| b* | -7,8 | -4,7 |
| RLᵥ (%) | 27,4 | 26,7 |
| L* | 59,4 | 58,7 |
| a* | -3,0 | -3,3 |
| b* | 2,6 | 1, 6 |

Les échantillons tels quels et trempés ont subi un test de vieillissement accéléré consistant à les plonger dans de l'eau déminéralisée bouillante pendant 2 heures. Les variations colorimétriques dues à un tel traitement sont présentées dans le tableau 11.

Comme plus avant dans le texte, ces variations sont exprimées par la grandeur ΔE* (qui correspond à la racine carrée de la somme des carrés des différences de valeurs chromatiques L*a*b* avant et après recuit). L'indice t, v, ou c correspond respectivement à la transmission, la réflexion côté verre et la réflexion côté couche.

**Tableau 11**

| | C3 | 8 |
|---|---|---|
| non-trempé | | |
| ΔE*ₜ | 6,7 | 0,1 |
| ΔE*_{c} | 36,0 | 0,2 |
| ΔE*ᵥ | 5,3 | 0,1 |

| trempé | | |
|---|---|---|
| ΔE*ₜ | 4,7 | 0,2 |
| ΔE*_{c} | 28,4 | 0,3 |
| ΔE*ᵥ | 3,6 | 0,1 |

L'échantillon comparatif présente une très forte dégradation d'aspect, notamment en réflexion côté couche, tandis que l'échantillon selon l'invention ne voit pas ses propriétés optiques modifiées.

Les échantillons ont également subi le test BSN (résistance au Brouillard Salin Neutre) décrit à l'annexe D de la norme EN 1096-2 :2001. La variation colorimétrique en réflexion, côté verre et côté couche est indiquée dans le tableau 12.

**Tableau 12**

| | C3 | 8 |
|---|---|---|
| ΔE*ᵥ | 3,7 | 0,1 |
| ΔE*_{c} | 33,4 | 0,7 |

Ici encore, l'échantillon comparatif présente une très forte modification d'aspect, au contraire de l'échantillon selon l'invention.

L'excellente durabilité climatique conférée par la couche photocatalytique permet d'utiliser le vitrage de contrôle solaire en face 1, donc en présentant l'empilement de couches vers l'extérieur du bâtiment.

En outre, l'exemple 8 présente une émissivité normale au sens de la norme EN 12898 de 0,2, que ce soit avant ou après trempe. Cette faible émissivité permet de limiter le refroidissement de la surface extérieure du vitrage pendant la nuit et en conséquence d'obtenir un effet de réduction ou de suppression de la condensation (buée et/ou givre) lorsque l'empilement est placé en face 1 du vitrage. Cet effet est particulièrement marqué dans le cas de doubles vitrages inclinés, par exemple en toiture ou vérandas.

### 4^{ème} série d'exemples

Le tableau 13 présente la composition et l'épaisseur des exemples 9 à 12. L'empilement est réalisé dans l'ordre du tableau, la première ligne correspondant à la couche la plus éloignée du substrat et la dernière ligne à celle en contact avec le substrat. Comme dans le reste de la description, les épaisseurs sont des épaisseurs physiques exprimées en nm.

**Tableau 13**

| | 9 | 10 | 11 | 12 |
|---|---|---|---|---|
| TiO₂ | 15 | 10 | 10 | 10 |
| SiO₂ | 0 | 0 | 0 | 20 |
| Si₃N₄ | 10 | 10 | 20 | 20 |
| NbN | 6 | 6 | 7 | 7 |
| Si₃N₄ | 11 | 11 | 11 | 11 |
| SiO₂ | 0 | 0 | 20 | 0 |

Le tableau 14 récapitule les propriétés colorimétriques et énergétiques des exemples 9 et 10. Les termes « TE », « RE », « g » correspondent respectivement à la transmission énergétique, à la réflexion énergétique et au facteur solaire au sens de la norme NF EN 410 :1998.

**Tableau 14**

| | 9 | 10 |
|---|---|---|
| TL (%) | 51,5 | 51,2 |
| L* | 77 | 76,8 |
| a* | -1,1 | -1,0 |
| b* | 0 | 0 |
| RL_{c} (%) | 18, 1 | 18,4 |
| L* | 49, 6 | 50 |
| a* | 0,5 | 0,3 |
| b* | -1 | -1 |
| RLᵥ (%) | 19,2 | 15 |
| L* | 50, 9 | 45,6 |
| a* | -0,8 | -0,4 |
| b* | -12,1 | -10, 9 |
| TE (%) | 49,0 | 48, 8 |
| RE (%) | 18,4 | 18, 6 |
| g | 0,581 | 0,581 |

Les empilements 9 et 10 présentent une teinte en réflexion côté couche particulièrement neutre.

On peut trouver dans le tableau 15 les propriétés optiques des exemples 11 et 12. La valeur ΔE* correspond ici à la variation de couleur en réflexion côté couche due à une variation d'épaisseur de +/- 10% en relatif de la couche de SiO₂.

**Tableau 15**

| | 11 | 12 |
|---|---|---|
| TL (%) | 49,9 | 54,7 |
| L* | 76,0 | 78, 9 |
| a* | -1,1 | -1,5 |
| b* | -1,3 | -2,5 |
| RL_{c} (%) | 15,7 | 8,3 |
| L* | 46, 6 | 34,5 |
| a* | 0,6 | 2,6 |
| b* | 3,8 | 16, 6 |
| RLᵥ (%) | 20,8 | 21,9 |
| L* | 52,7 | 53,9 |
| a* | -1,4 | -3,3 |
| b* | -10,6 | -2,0 |
| TE (%) | 47,2 | 50,8 |
| ΔE* | 0,1 | 3,7 |

Il ressort de la comparaison des valeurs de ΔE* que le positionnement de la couche de silice en contact avec le substrat de verre permet de minimiser les variations de teinte en réflexion dues à d'éventuelles variations d'épaisseur de cette même couche de silice. Au contraire, lorsque la couche de silice est placée sous la couche photocatalytique, toute modification de son épaisseur entraîne une variation de teinte importante.

## Revendications

1. Matériau comprenant un substrat en verre revêtu sur au moins une de ses faces d'un empilement de couches minces comprenant depuis ledit substrat au moins une couche diélectrique inférieure, au moins une couche fonctionnelle en métal ou nitrure métallique, au moins une couche diélectrique supérieure, au moins une couche d'oxyde de titane au moins partiellement cristallisé sous forme anatase, ledit métal ou nitrure métallique étant à base de Nb, NbN, W, WN, Ta, TaN ou de l'un quelconque de leurs alliages ou solutions solides.

2. Matériau selon la revendication 1, tel que l'empilement de couches minces ne comprend pas de couches d'argent ou de cuivre.

3. Matériau selon l'une des revendications précédentes, tel que l'épaisseur de la couche fonctionnelle en métal ou nitrure métallique varie entre 3 et 50 nm, notamment entre 5 et 30 nm.

4. Matériau selon l'une des revendications précédentes, tel que la au moins une couche diélectrique inférieure et/ou la au moins une couche diélectrique supérieure est choisie parmi l'oxyde, le nitrure ou l'oxynitrure de silicium ou d'aluminium, l'oxyde d'étain ou l'oxyde mixte d'étain et de zinc.

5. Matériau selon l'une des revendications précédentes, dans lequel la couche fonctionnelle est métallique, et une couche de bloqueur est interposée entre la couche fonctionnelle et la couche diélectrique supérieure la plus proche de la couche fonctionnelle, voire également entre la couche fonctionnelle et la couche diélectrique inférieure la plus proche de la couche fonctionnelle.

6. Matériau selon la revendication précédente, tel que la couche de bloqueur est en un métal choisi parmi le titane ou le chrome ou en un alliage de nickel et de chrome.

7. Matériau selon l'une des revendications précédentes, tel qu'au moins une couche de silice est interposée entre la au moins une couche diélectrique supérieure et la au moins une couche d'oxyde de titane

8. Matériau selon l'une des revendications précédentes, tel qu'au moins une couche de silice est interposée entre le substrat et la couche diélectrique inférieure la plus proche du substrat.

9. Matériau selon l'une des revendications précédentes, tel que l'empilement est choisi parmi les empilements suivants :
- Verre / Si₃N₄ / NbN / Si₃N₄ / TiO₂
- Verre / Si₃N₄ / NbN / Si₃N₄ / SiO₂ / TiO₂
- Verre / SiO₂ / Si₃N₄ / NbN / Si₃N₄ / TiO₂
- Verre / SiO₂ / Si₃N₄ / NbN / Si₃N₄ / SiO₂ / TiO₂
- Verre / Si₃N₄ / WN / Si₃N₄ / TiO₂
- Verre / Si₃N₄ / WN / Si₃N₄ / SiO₂ / TiO₂
- Verre / SiO₂ / Si₃N₄ / WN / Si₃N₄ / TiO₂
- Verre / SiO₂ / Si₃N₄ / WN / Si₃N₄ / SiO₂ / TiO₂
- Verre / Si₃N₄ / Ti / Nb / Ti / Si₃N₄ / TiO₂
- Verre / Si₃N₄ / Ti / Nb / Ti / Si₃N₄ / SiO₂ / TiO₂
- Verre / SiO₂ / Si₃N₄ / Ti / Nb / Ti / Si₃N₄ / TiO₂
- Verre / SiO₂ / Si₃N₄ / Ti / Nb / Ti / Si₃N₄ / SiO₂ / TiO₂

10. Matériau selon l'une des revendications précédentes, tel que l'épaisseur de la couche d'oxyde de titane est comprise entre 5 et 50 nm, notamment entre 5 et 20 nm.

11. Procédé d'obtention d'un matériau selon l'une des revendications précédentes, dans lequel on dépose les couches de l'empilement par pulvérisation cathodique magnétron ou dépôt chimique en phase vapeur.

12. Procédé selon la revendication précédente, dans lequel l'étape de dépôt est suivie d'un traitement thermique, notamment du type trempe, bombage, recuit, ou d'un traitement rapide à l'aide d'un rayonnement laser ou d'une flamme.

13. Vitrage comprenant au moins un matériau selon l'une des revendications de matériau précédentes.

14. Utilisation d'un vitrage selon la revendication précédente en tant que vitrage de contrôle solaire pour le bâtiment ou les véhicules.

15. Utilisation selon la revendication précédente, dans laquelle l'empilement est placé à l'extérieur du bâtiment ou du véhicule.

## Patentansprüche

1. Material, das ein Substrat aus Glas umfasst, das auf mindestens einer seiner Seiten mit einem Stapel von dünnen Schichten beschichtet ist, die ausgehend von dem Substrat mindestens eine untere dielektrische Schicht, mindestens eine Funktionsschicht aus Metall oder Metallnitrid, mindestens eine obere dielektrische Schicht, mindestens eine teilweise kristallisierte Titanoxidschicht in Anatasform umfassen, wobei das Metall oder Metallnitrid auf Nb, NbN, W, WN, Ta, TaN oder irgendeiner ihrer Legierungen oder festen Lösungen basiert.

2. Material nach Anspruch 1, wobei der Stapel von dünnen Schichten keine Silber- oder Kupferschichten umfasst.

3. Material nach einem der vorhergehenden Ansprüche, wobei die Dicke der Funktionsschicht aus Metall oder Metallnitrid zwischen 3 und 50 nm, insbesondere zwischen 5 und 30 nm, schwankt.

4. Material nach einem der vorhergehenden Ansprüche, wobei die mindestens eine untere dielektrische Schicht und/oder die mindestens eine obere dielektrische Schicht unter Oxid, Nitrid oder Silizium- oder Aluminiumoxinitrid, Zinnoxid oder Zinn- und Zinkmischoxid ausgewählt ist/sind.

5. Material nach einem der vorhergehenden Ansprüche, wobei die Funktionsschicht metallisch ist und eine Sperrschicht zwischen der Funktionsschicht und der oberen dielektrischen Schicht, die am nächsten an der Funktionsschicht liegt, oder sogar auch zwischen der Funktionsschicht und der unteren dielektrischen Schicht, die am nächsten an der Funktionsschicht liegt, eingefügt ist.

6. Material nach dem vorhergehenden Anspruch, wobei die Sperrschicht ein Metall ist, das unter Titan oder Chrom oder einer Nickel- und Chromlegierung ausgewählt ist.

7. Material nach einem der vorhergehenden Ansprüche, wobei mindestens eine Siliziumschicht zwischen der mindestens einen oberen dielektrischen Schicht und der mindestens einen Titanoxidschicht eingefügt ist.

8. Material nach einem der vorhergehenden Ansprüche, wobei mindestens eine Siliziumschicht zwischen dem Substrat und der unteren dielektrischen Schicht, die am nächsten am Substrat liegt, eingefügt ist.

9. Material nach einem der vorhergehenden Ansprüche, wobei der Stapel unter den folgenden Stapeln ausgewählt ist:
- Glas / Si₃N₄ / NbN / Si₃N₄ / TiO₂
- Glas / Si₃N₄ / NbN / Si₃N₄ / SiO₂ / TiO₂
- Glas / SiO₂ / Si₃N₄ / NbN / Si₃N₄ / TiO₂
- Glas / SiO₂ / Si₃N₄ / NbN / Si₃N₄ / SiO₂ / TiO₂
- Glas / Si₃N₄ / WN / Si₃N₄ / TiO₂
- Glas / Si₃N₄ / WN / Si₃N₄ / SiO₂ / TiO₂
- Glas / SiO₂ / Si₃N₄ / WN / Si₃N₄ / TiO₂
- Glas / SiO₂ / Si₃N₄ / WN / Si₃N₄ / SiO₂ / TiO₂
- Glas / Si₃N₄ / Ti / Nb / Ti / Si₃N₄ / TiO₂
- Glas / Si₃N₄ / Ti / Nb / Ti / Si₃N₄ / SiO₂ /TiO₂
- Glas / SiO₂ / Si₃N₄ / Ti / Nb / Ti / Si₃N₄ / TiO₂
- Glas / SiO₂ / Si₃N₄ / Ti / Nb / Ti / Si₃N₄ / SiO₂ / TiO₂

10. Material nach einem der vorhergehenden Ansprüche, wobei die Dicke der Titanoxidschicht zwischen 5 und 50 nm, insbesondere zwischen 5 und 20 nm, enthalten ist.

11. Verfahren zum Erhalten eines Materials nach einem der vorhergehenden Ansprüche, wobei die Schichten des Stapels durch Magnetron-Kathodenzerstäubung oder chemische Gasphasenabscheidung abgeschieden werden.

12. Verfahren nach dem vorhergehenden Anspruch, wobei auf den Schritt des Abscheidens eine Wärmebehandlung, insbesondere vom Typ Härten, Biegen, Glühen oder eine schnelle Behandlung mittels einer Laserstrahlung oder einer Flamme folgt.

13. Verglasung, die mindestens ein Material nach einem der vorhergehenden Materialansprüche umfasst.

14. Verwendung einer Verglasung nach dem vorhergehenden Anspruch als Sonnenschutzverglasung für Gebäude oder Fahrzeuge.

15. Verwendung nach dem vorhergehenden Anspruch, wobei der Stapel auf der Außenseite des Gebäudes oder des Fahrzeugs untergebracht ist.

## Claims

1. A material comprising a glass substrate coated on at least one of its faces with a thin-film multilayer comprising, starting from said substrate, at least one lower dielectric layer, at least one functional layer made of a metal or metal nitride, at least one upper dielectric layer and at least one layer of titanium oxide at least partially crystallized in the anatase form, said metal or metal nitride being based on Nb, NbN, W, WN, Ta, TaN or any of their alloys or solid solutions.

2. The material as claimed in claim 1, such that the thin-film multilayer does not comprise silver or copper layers.

3. The material as claimed in either of the preceding claims, such that the thickness of the functional layer made of a metal or metal nitride varies between 3 and 50 nm, especially between 5 and 30 nm.

4. The material as claimed in one of the preceding claims, such that the at least one lower dielectric layer and/or the at least one upper dielectric layer is chosen from silicon oxide, nitride or oxinitride, aluminum oxide, nitride or oxinitride, tin oxide and a mixed tin zinc oxide.

5. The material as claimed in one of the preceding claims, in which the functional layer is metallic and a blocker layer is interposed between the functional layer and the upper dielectric layer closest to the functional layer, or also between the functional layer and the lower dielectric layer closest to the functional layer.

6. The material as claimed in the preceding claim, such that the blocker layer is made of a metal chosen from titanium, chromium, and a nickel-chromium alloy.

7. The material as claimed in one of the preceding claims, such that at least one silica layer is interposed between the at least one upper dielectric layer and the at least one titanium oxide layer.

8. The material as claimed in one of the preceding claims, such that at least one silica layer is interposed between the substrate and the lower dielectric layer closest to the substrate.

9. The material as claimed in one of the preceding claims, such that the multilayer is chosen from the following:
- glass/ Si₃N₄/NbN/Si₃N₄/TiO₂;
- glass/ Si₃N₄/NbN/Si₃N₄/SiO₂/TiO₂;
- glass/ SiO₂/Si₃N₄/NbN/Si₃N₄/TiO₂;
- glass/ SiO₂/Si₃N₄/NbN/Si₃N₄/SiO₂/TiO₂;
- glass/ Sl₃N₄/WN/Si₃N₄/TiO₂;
- glass/ Si₃N₄/WN/Si₃N₄/SiO₂/TiO₂;
- glass/ SiO₂/Si₃N₄/WN/Si₃N₄/TiO₂;
- glass/ SiO₂/Si₃N₄/WN/Si₃N₄/SiO₂/TiO₂;
- glass/ Si₃N₄/Ti/Nb/Ti/Si₃N₄/TiO₂;
- glass/ Si₃N₄/Ti/Nb/Ti/Si₃N₄/SiO₂/TiO₂;
- glass/ SiO₂/Si₃N₄/Ti/Nb/Ti/Si₃N₄/TiO₂;
- glass/ SiO₂/Si₃N₄/Ti/Nb/Ti/Si₃N₄/SiO₂/TiO₂.

10. The material as claimed in one of the preceding claims, such that the thickness of the titanium oxide layer is between 5 and 50 nm, especially between 5 and 20 nm.

11. A process for obtaining a material as claimed in one of the preceding claims, in which the layers of the multilayer are deposited by magnetron sputtering or by chemical vapor deposition.

12. The process as claimed in the preceding claim, in which the deposition step is followed by a heat treatment, especially of the tempering, bending or annealing type, or by a rapid treatment using laser radiation or a flame.

13. Glazing comprising at least one material as claimed in one of the preceding material claims.

14. The use of glazing as claimed in the preceding claim as solar-control glazing for buildings or vehicles.

15. The use as claimed in the preceding claim, in which the multilayer is placed on the outside of the building or vehicle.
